# EUROPEAN PATENT APPLICATION

(11) **EP 4 160 937 A1**
(43) Date of publication of application: **05.04.2023**
(21) Application number: 21306347.2
(22) Date of filing: 29.09.2021
(51) Int. Cl.: H04B 7/185, H04W 36/00

(54) **MANAGEMENT OF USER EQUIPMENT'S RE-DIRECTION TO EARTH-BASED NETWORK**

(71) Applicant: THALES DIS AIS Deutschland GmbH, 81541 München (DE)
(72) Inventor: BREUER, Volker, 16727 BOETZOW (DE); DEMARTY, Joël, 35520 MONTREUIL LE GAST (FR)
(74) Representative: Thomas, Christine Marie Catherine

(57) **Abstract**

The present invention relates to a method to assist an user equipment re-location to an earth-based network while the user equipment is connected to a satellite-based network or camps on a satellite-based network, said method comprising the steps of, for the satellite-based network, at the time of registration of the user equipment to the satellite-based network, retrieving and storing an earth-based service preference indicator for the user-equipment. Then, when the user equipment at a given position proceeds to a subsequent action with the satellite-network it is connected to or it is camping on, receiving, from the user equipment, with the action-related exchanges, the user equipment position, reading the earth-based service preference indicator by the re-location function of satellite-based network, evaluating available earth-based networks, in case, while considering the earth-based service preference indicator, suitable earth-based network for setting up service relation for said user equipment is available at the given user equipment position, sending to the user equipment an indication to perform a re-direction attempt to said suitable earth-based network.

## Description

### FIELD OF THE INVENTION

The present invention relates to a method to assist a user equipment re-location to an earth-based network while the user equipment is connected to a satellite-based network or camps on a satellite-based network.

The invention also pertains to a Satellite-based network infrastructure comprising a user-equipment re-location function to manage user equipment re-selection to an earth-based network while the user equipment is connected to the satellite-based network or camps on the satellite-based network.

### BACKGROUND OF THE INVENTION

In terms of mobility, in 5G technology, it is known that mobility for NTN-loT is considered handover-based for eMTC and RLF-based (Radio Link Failure) for NB-loT. NB-IoT and eMTC are standalone 5G technologies without any interaction to other technologies via handover or other supported by the network.

In case of roaming the NB-lot and eMTC user equipments (UE) perform in principle the same procedures as other UEs. It means that when being roaming on another public land mobile network (VPLMN for visited-PLMN) than the Home PLMN HPLMN or equivalent HPLMN EHPLMN, the UE searches regularly for its HPLMN. The search periodicity depends on some timer information retrieved from the SIM card with related field, i.e. interpreting how often and in which periodicity an HPLMN search is to be conducted by the UE.

The importance of avoiding too often-unsuccessful searches for loT devices was recognized by 3GPP and hence different periodicity and parameter were introduced in TS23.122 Rel.-16. In addition, WO2020239324 contained further suggestions on minimizing the power consumption when doing HPLMN search. However, in case of being satellite connected the satellite connection is in general more power consuming due to larger distance between UE and satellite based base station (regardless whether LEO,GEO or MEO). So it would be beneficial for the UE to return as soon as possible to the earth-based station in case there are no other reasons than having lost connection or being out-of-coverage from earth-based service earlier on. However, giving the large number of bands which may be used for NB-loT or eMTC service, a single search of all respective bands without any supporting information can take several minutes and hence draining the battery quickly.

The general problem encountered by a user equipment while moving is subsequent search attempts with mode change to perform fast re-location to earth-based service. Indeed the standard feature is to perform search as normally done in roaming. In earth-based network, the current base station may provide additional information i.e. a geographical position, whether eMTC or NB-loT cells are in reach, or such information can be derived by knowing which country the serving base station is from to perform a "directed search". It means that, if the UE is served by the roaming network, it can conclude from the provided information within the broadcast several aspects, by MNC and MCC (Mobile network code and mobile country code) it can conclude on the region/country where it is located and hence can evaluate whether an HPLMN or EHPLMN is deployed in this country or a neighbor country and hence make some dedicated search. Moreover the device may also have a list of bands populated in this country with NB-lot or eMTC from its HPLMN or EHPLMN. It means that the UE can capture some information which allows to perform a dedicated search. i.e. search for special operators knowing where these HPLMNs have deployed their NB-loT or eMTC bands correspondingly.

Such information is static information transferred via broadcast, as the location is fixed and the base station is not moving And hence also the relation of the current roaming base station and a higher ranked base station is fixed. It means when knowing that there is no higher ranked PLMN in said country there is no need to start a corresponding search. If there is a higher ranked PLMN, e.g. HPLMN, deployed, the UE will start a search at the designated time in corresponding frequency deployed.

Furthermore in the earth-based stations, in the broadcast, there is a support mechanism which consists in a presence indication, i.e. an information element broadcasted in the current network/technology which indicates that NB-IoT/eMTC or GSM is deployed in said area and hence a switch to said technology if desired by the device may be successful. Said information is present in the NB-loT or eMTC broadcasts respectively. NTN-loT means loT connection via satellite can be done via eMTC or NB-IoT and there is no information, which can be derived from the broadcast, and hence situation is even worse, as the device for an earth-based search may even need to switch technology mode in addition.

In WO2020094451, problems when hanging core network or avoiding such change are addressed in both technologies for NB-IoT. For eMTC, the network does a handover and hence such issue should not occur. However, if there is no corresponding cell with appropriate core network, connection will fail and upon reestablishment RLF indication with core network can also be done. In such a case, it is however likely that desired core is not present, otherwise it would have been an handover candidate. All these solutions are adapted to earth-based network.

In context of the NTN-loT (Non-Terrestrial Network Internet of Things) Study Item update (RP-210868), it was reconfirmed that both NB-IoT (Narrow-Band Internet of Things) and eMTC (enhanced Machine Type Communication) over satellite are part of the NTN-loT including also both core network options, i.e. being connected to EPC (Evolved Packet Core) or being connected to 5GC (5 Generation Core). These are all options also defined for terrestrial loT. Satellite usage is thus standardized for eMTC and NB-loT with both options being connected to 4G or 5G core, respectively the EPC or 5GC. As outlined above, earth-based re-location or HPLMN search is a UE autonomous search where just the occurrence and periodicity is regulated by the network side with corresponding configurations provided. This is feasible, as outlined above, as the UE can retrieve all relevant information, which it additionally can use for beneficial implementation leading to a power efficient behaviour and re-location/PLMN re-selection process between earth-based networks.

Changing a connection from earth-based to satellite coverage is pretty clear, as this can be done in conjunction with a coverage loss or other advantages considered for satellite connection. it means if there is no earth-based network available which can provide a service as being in a country with no, or no reliable network or roaming partner or just simple being on sea, the device can switch its mode and service to satellite-based service to maintain connectivity and avoid being out-of-service. However, even if avoiding loss of coverage is important for loT applications, returning back to earth-based coverage can lead to power and capacity harmful behaviour of the user equipment.

Thus the same problem of search attempts exists for NTN-loT to earth connection/camping transformation. However in this case the aforementioned earth-based solutions would not work. The reasons are that the satellite beam has a diameter of up to 50km and the satellite beam is moving, especially for LEO (Low Earth Orbit) which are most interesting for loT applications. Hence any information broadcasted would need to be sub sequentially updated, draining batteries of the devices listening. Also satellite- and earth-based networks are different networks, hence certain user equipments may only access to certain earth-based networks i.e. network which whom their owner/operator has roaming agreement or being their HPLMN or EHPLMN. It means the problem is here even substantially different, as the UE may not only perform a PLMN change because of its HPLMN or EHPLMN but also to an earth-based VPLMN, while as such networks may be higher ranked than satellite network. For the UE the benefit lies here in power saving.

In addition, certain UE types may only access satellite in general or for specific tasks, means any support from the satellite-based network on dedicated basis would also required the need to know on the UE whether it wants to re-allocate to earth-based service or not.

In addition also an earth-based relocation/connection can also be beneficial for the satellite-based network, as in certain areas with bad coverage many devices may consequentially roam to the satellite-based network for service, however as soon as there is another possibility a re-connection to earth-based network may be of benefit to prevent the satellite-based network from overload. Re-location to earth is hence also an important means for the satellite network for load balancing reasons. So there may be a certain interest to support the UE in an autonomous re-location process if known by the satellite-based network or offered as a service.

Indeed in case of a LEO satellite, which is considered for loT, nothing can be derived from the current serving satellite and no broadcast assistance information can be received as the satellite is moving itself. NB-lot or eMTC then ignore what to search for. In addition switching from satellite- to earth-based for and back drains the device's battery especially when considering the numerous bands, which may need to be searched for both frequencies.

Also, none simple broadcast presence solution for earth-based technology are deployed. Furthermore, it is unclear for the satellite-based network which networks could be accessed by a UE while reconnecting on earth when needed or wished.

Thus, so far, a controlled reconnection to earth can only be done on try and error, as satellite cannot provide any assisting broadcast information because they are moving and knowledge for dedicated signalling is lacking. The device is also not aware that it can also connect to earth NB-IoT/eMTC. Also, so far, the device has no possibility to control its way back to earth. Also it may not want to return to earth-based coverage, for example if the switch to a satellite-based network was done for security reason.

So far, handover capability between different networks or PLMNs depends on inter-PLMN (Public Land Mobile Network) capabilities.

As of today HPLMN selection is a UE autonomous process. It is steered in periodicity and repeated attempts by information provided by the HPLMN on the SIM card. The information of the roaming network is only used as assistance information and in general has no mean to influence the HPLMN re-selection process, i.e. whether executed or not. Only smart UE implementations use said general present information to perform directed search. However, HPLMN search periodicity is configured by the HPLMN by the values provided on the SIM.

For satellite the process needs to be in a directed way and started whenever preferred earth-based service is in reach to ensure early re-connection to earth-based service for power saving reasons, i.e. a satellite connection and transmit data via satellite requires more energy than doing it earth-based. In addition when being connected to satellite, subsequent re-reading of SIBs is required as cells especially LEO satellites may be changed quickly.

The solution of storing all required information on potential roaming partners in the user equipment is disadvantageous, as a larger user equipment storage would be required for keeping a global coverage map for checking coverage with related position and such material would moreover need to be kept actual. Especially, for tracking devices where power saving is important, keeping such material actual would require subsequent updates which hence would cost power. The use of such service preferred information stored internally in the user equipment is reserved to cases where it causes the user equipment to select a network which can provide special service, i.e. voice service support for eMTC correspondingly.

Also the solution of signalling all potential cells to be selected when changing from NTN-to TN network, i.e. from satellite to earth based is not an option as due to the large coverage of the satellite beam and the huge number of terrestrial networks (TN).The signalling overhead whether dedicated or broadcasted would just be too huge.

Aspects related to interaction of satellite-based network with earth-based coverage and interworking are not yet standardized at the level of re-direct between different PLMNs or corresponding re-selection. However there is the interest to re-direct the connection of the device as soon as possible and in an efficient way to a suitable earth based connection, in particular either eMTC or NB-IoT.

There is thus a need for efficient and advantageous solutions to manage the mobility of the devices between satellite-based and earth-based networks.

### SUMMARY OF THE INVENTION

The present invention aims at providing a simple and efficient method to manage the re-connection of communication devices to earth-based network while being connecting to a satellite-based network or camping on it.

The present invention is defined, in its broadest sense, as a method to assist an user equipment re-location to an earth-based network while the user equipment is connected to a satellite-based network or camps on a satellite-based network, said method comprising the steps of, for the satellite-based network:
- at the time of registration of the user equipment to the satellite-based network:
   o retrieving an earth-based service preference indicator for the user-equipment,
   o storing, by a user-equipment re-location function of the satellite-based network or interacting with the satellite-based network, said retrieved earth-based service preference indicator for further use, and then,
- when the user equipment at a given position proceeds to a subsequent action with the satellite-network it is connected to or it is camping on:
   o receiving, from the user equipment, with the action-related exchanges, the user equipment position,
   o reading the earth-based service preference indicator by the re-location function of satellite-based network ,
   ∘ evaluating available earth-based networks,
   o in case, while considering the earth-based service preference indicator, suitable earth-based network for setting up service relation for said user equipment is available at the given user equipment position, sending to the user equipment an indication to perform a re-location attempt to said suitable earth-based network.

Said indication is provided in context of the termination of the action-related exchanges between the user equipment and the satellite-based network.

In addition said indication is not only considering suitable operators but also device capabilities such as technologies support, regardless of which technology NB-lot or eMTC is currently used in conjunction with the satellite network, and frequency bands supported by the device.

The method of the invention enables the user equipment to return back in a timely manner to earth-based coverage which leads to power and capacity advantages. It allows efficient switch from satellite back to earth based coverage especially for cases where the switch was forced by leaving earth based coverage area. This avoids a subsequent search for any earth-based network, which may drain the battery when being based on periodic searches or lead to long delays in change when periodicity is too large. In addition this may also prevent the device from subsequent technology mode switches i.e. from NB-lot to eMTC depending on which technology is used in satellite network and which is used in the earth-based network or the preferred technology depending on UE use case.

The network selection and indication by the satellite is signaled in dedicated way, the selection process involves information received by the roaming PLMN from the HPLMN the user equipment belongs to, i.e. a list of suitable or acceptable networks.

The device anyway needs to report its geographical position for regulatory purpose, i.e. national law, and related satellite treatment. Decision is made at the satellite-based network based on known and verified user equipment position as regulatory received by the satellite-based network. This transmission of the user equipment position is besides standardized and it is not part of the present invention to describe how this knowledge is gained with corresponding reliability.

The invention avoids to know for all possible UE earth-based UE roaming networks and HPLMN/EHPLMN to evaluate whether one of the networks being in proximity of the UE position would accept the UE for service. With the invention, such information is provided from the UE HPLMN when entering the satellite network as roaming UE.

Besides loss of coverage a UE may also have entered the satellite network for other reasons, i.e. being more secure to exchange data via satellite than earth-based networks. As a consequence the server would also need to have an indication whether the UE intends or would like to be re-directed to an earth-based network to avoid ping-pong effects. The invention provides a solution to this issue.

Thus in case the user equipment reaches a corresponding coverage area verified by its position by the satellite-based network, the satellite-based network will indicate said situation to the user equipment. The indication can be done at the end or during the ongoing communication session, for example when sending the connection release to the user equipment including an indicating on technology and frequency of respective suitable earth-based network.

The satellite-based network evaluates whether earth-based coverage is in reach at every communication exchange, including the simple regulatory reception of the user equipment position. Said evaluation is done for all UEs which have indicated earth-based service preferred and additional information on suitable roaming/PLMN networks is additionally available.

According to the method of the invention, the earth-based service preference indicator can be transferred by the earth-based current PLMN or by the user equipment itself, however additional information are advantageously exchanged besides the "earth-based service preference indicator" between the core networks directly. Thus satellite core-network and UE HPLM signalling resources on the air interface are saved. Hence the invention includes the exchange of these additional information between the core-networks which avoids user equipment signalling and involvement except the provision of the user equipment position and, when applicable, of the earth-based service preference indicator. It means that all remaining information can come from the core network. It is here also noted that most of the information is also not important for the satellite network, only for re-selection function. It also means that the user equipment does not need to signal capabilities besides actual satellite communication. It means that the UE advantageously sends all UE capabilities which are important for the satellite network but not more.

In the case said satellite network is based on a single technology i.e. NB-IoT in a single frequency band hence any indication on the support of additional technologies, in this example eMTC of GSM, not used by the satellite network and frequency bands not used by the satellite network would not be of benefit for the communication between the user equipment and the satellite network but important for the return to earth assistance function.

The full set of technologies and frequency bands supported by the UE is important for evaluating a suitable PLMN besides the question whether the UE would be allowed on said network, as it also needs to clarify whether it could assess or connect to said network from its capabilities.

Especially the invention optimizes the connection change from satellite-based to earth-based network by introduction of a supporting function/server in the network which optimizes the connection change based on:
- actual UE position which is evaluated and transferred at every occasion when the UE starts communicating with the satellite-based network (a must for regulatory reasons
- the knowledge on potential earth-based roaming/HPLMN networks; and
- the preference of the UE to be earth-serviced is used to optimize said re-direction/guidance for re-selection to earth.

It means that, when the UE is in a location, where an earth-based service based on a frequency band and technology supported by the UE would be in reach, the satellite-based network respectively information provided by the re-location server, indicates to said frequency or earth-network when terminating the current communication occasion with the satellite network.

The server estimates based on UE position, technologies and frequency bands supported and the knowledge on potential roaming PLMNs or HPLMN/EHPLMN whether an earth-based network is in reach which would be willing to serve the UE and the UE could try to register to said network.

With the invention, the user equipment is informed that it can connect to earth-based network while it is connected to a satellite-based network only. Thus, prior next scheduled communication session, the device can start a search based on the information provided in the best suited form. Once the UE has found an earth-based network, it tries to register accordingly by the well-known PLMN selection procedure, in case of roaming including network communication with its HPLMN. However, said registration as such is not part of the invention, but an additional reasoning such as earth-based re-location when performing cell selection could be included, which could give some indication that the UE was earlier on connected to satellite-based network and respective core entities could inform the satellite-based network or the HPLMN that the device is re-located. Said indication to the satellite network may be beneficial to avoid resource keeping in said network. In addition parts of the context or UE related information could also be retrieved.

Based on the user equipment position and on the earth-based service preference indicator advantageously including the user equipment's capabilities, also related to non-active technologies (i.e. eMTC or NB-lot EPC/5GC or vice versa) and MNOs, the user equipment can then connect to a suitable PLMN when roaming is clarified. This uses only the user equipment position and capabilities related to a global coverage map of MNOs and technologies. If so it indicates this and also indicates MNO and whether technology needs to be changed. Especially it is considered advantageous if indications on non-used technologies by the satellite-based network and corresponding frequency bands and potential operator roaming partners are directly transferred between the UEs HPLMN and the re-location service center/function. As the relocation service center/function relies on information of the home-network and is important for the device, it may also be the HPLMN which runs said service engine. It means that the 5G core network of the satellite-based network have in its service oriented architecture the re-location function connected.

The presence of the relocation function may be indicated in a Network Repository Function which acts as network discovery function and maintains Network Functions and services being available from the network and indicated to users by a Network Exposure Function. It provides a means to expose the services provided to the users by the 3GPP network functions.

The indication for suitable earth-based service hence could be provided by such connected service center and also the indication on suitable earth-based network in reach could be provided in the data stream by such a service center. In that sense the invention is comparable to a data center running a service. Operating the re-location function as a service being part or inter-working with satellite network and hence having access or making use of information mandatory provided in signaling/control plane and using the positioning information of the device provided at communication setup for the re-location function is thus original and advantageous. While not being part of satellite network or not being connected to the service functions, there would be no way to access said information used in signaling plane and there would be an additional communication need/repetition via user data plane.

According to an advantageous feature, the method comprises a preliminary step of storing and updating, for each user equipment, an earth-based service preference indicator in a central server accessible to the satellite-based network, said earth-based service preference indicator for the user-equipment being then retrieved by the satellite-based network from this central server.

In case said server would be hosted by the HPLMN there may be more than one server, or at least a virtual architecture where for devices from different HPLMNs different virtual servers may exist, receiving information from the respective HPLMNs of the devices.

With this feature, a centralized server is connected to the satellite network, either being a part of it, or being connected via the re-direction service functions. Being part of the satellite-based network makes however it easier to retrieve the indicator, the UE position and to provide information via the signaling plane. However, being a pure HPLMN service connected to the 5G service architecture of the satellite network would also work, but would need to transfer information differently, i.e. in a data stream.

With the invention, this is the user equipment which, by waking up for doing connection service and sending its position, triggers the main steps of the invention. The user equipment thus monitors the timing of the invention but not the knowledge. So far it was a periodic timer provided by the HPLMN, i.e. the HPLMN service center is triggered when the UE wakes up. Also the introduction of a maximum time when to wake-up for HPLMN could be an add-on. In this case such a timer would be in the UE and the UE would wake up when timer value is reached in addition regardless of normal service needs. However, such additional wake up to transmit data (empty packets) to stimulate re-location center/function may only be advantageous in very seldom cases. To avoid that a UE is stuck on satellite network when there is a malfunction in relocation function, a UE could do autonomous search with very large timer values. However, this would be aligned to state of the art and have the aforementioned drawbacks. The method of the invention as such does not imply extra wake-up or activities in the user equipment. While the user equipment sends data to the satellite-based network, the central server evaluates whether the user equipment can re-allocate to earth. Then, advantageously, in a connection termination, available earth network is indicated.

The earth-base service preference indicator is information exchanged between UE and satellite-based network, or components of PLMNs, two core-networks upon which corresponding action and information exchange needs to happen. However, receiving said earth-based preference indicator from the UE in its capabilities may have the benefit that depending on security needs a UE may willingly camp in a certain area preferably on satellite network and receive via said network information for reliability and security reasons. For example, in Europe, a UE may want to return asap to earth-based service, if change to satellite was caused by coverage holes, but in certain parts of Africa where there are less trusted/functioning networks the device may willingly stay or have changed on/to the satellite-based network. The earth-based preference indicator can here be an information/differentiation which could only be done by the UE and its integrated functions.

Advantageously, the central server is connected to a user equipments' Home Location Register. It enables to retrieve further information not used in conjunction with the satellite network, i.e. technologies or additional frequency bands supported.

Advantageously, the storage of the earth-based service preference indicator is performed when the user equipment is accepted as roaming user equipment by the satellite-based network from a previously connected Public Land Mobile Network.

This feature enables the satellite-based network to have the information directly available for the satellite-based network.

Advantageously, the earth-based service indicator is retrieved directly from the user equipment and additional user equipment capability information are retrieved from a previously connected Public Land Mobile Network or from the Home Public Land Mobile Network.

This is particularly advantageous where especially UE capabilities on technologies, frequency bands and features are listed not being used in conjunction with the satellite communication.

According to an advantageous embodiment, the retrieval of the earth-based service indicator is performed when the user equipment starts to camp on satellite-based network.

Hence said information can be exchanged by the UE at connection setup or with the UE capabilities. This enables to insure that, while camping, the user equipment will be re-directed to earth-based network as soon as possible.

According to an advantageous feature, the re-location function retrieves a list of suitable earth-based roaming networks for earth-based service of the user equipment.

Such a direct retrieval of suitable earth-based roaming networks enables an easy selection and detection of the presence of a suitable earth-based network in order to indicate it to the user equipment according to the invention.

Advantageously, said list of suitable earth-based roaming networks is retrieved from a user equipment's Home Location Register during camping on the satellite-based network.

Receiving said information from the user equipment itself could also be a potential solution, but giving the maintenance and signaling efforts to transfer and keep such a list up to date, receiving, according to the invention, that list from HLR of the user equipment where it is stored and maintained is more advantageous.

Besides maintain such a list by the HLR of the UE also the satellite-based network could maintain a list of suitable earth based networks for all UEs connected to the satellite and have a earth-based service preferred indicator active. In this situation it would be the satellite-based network which tries to re-direct the UEs to another VPLMN on earth for e.g. offloading purposes.

According to an advantageous feature, the list of suitable earth-based networks is established based on off-loading contracts for the earth-based networks to accept re-direction of the user equipment from satellite-based networks.

With this feature, satellite-based network may then negotiate directly with earth-based networks for user equipment offloading in certain areas. In practice, this list can be the same list as the one retrieved from the HLR or a second list.

Advantageously, the re-location function of the satellite-based network is located in an Access and Mobility Management Function of the satellite-based network or connected to that functionality, as data received via UE capabilities are stored/available in the AMF.

This feature enables a direct and quick access to the indicator corresponding to each user equipment that are currently in communication with the satellite-based network.

Advantageously, at the end of the method, the indication sent to the user equipment is inserted in a connection termination.

Once the user equipment has received the connection termination, it will start a search for a suitable PLMN. As the satellite-based network knows if such a suitable PLMN is available, the user equipment will find one. The invention avoids any previous attempts of the user equipment to search for a suitable earth-based network while none of such suitable earth-based network are available.

Advantageously, the connection termination is an RRC connection release with an indication that a suitable earth-based network is available for re-direction.

Such a connection termination gives additional information to the user equipment.

According to an embodiment, the indication is sent to the user equipment by use of a paging message.

This is valuable in cases where the evaluation was not finalized while the UE was in connection with the satellite network, and hence the UE is paged to perform re-location.

According to an advantageous feature, while receiving the paging message, the user equipment ignore said paging message in relation to the satellite-based network and perform re-location instead.

According to an optional embodiment, the method further comprises the step of sending earth information to the suitable earth-based network as indicated in the earth-based service preference indicator to ease the re-direction of the user equipment to this earth-based network.

This optional feature enables an easier connection of the user equipment to a selected suitable earth-based network and if the satellite network is informed on successful re-location it avoids any further resource considerations.

More particularly and advantageously, the earth-based service preference indicators comprises at least an information whether the user equipment UE prefers to be earth-based operated and information on the technologies supported by the user equipment comprising frequency bands supported by the UE, roaming networks which the UE could connect to, PLMN and EHPLMN information.

This gives the possibility to the satellite-based network to evaluate whether a suitable earth-based network should be searched or not.

Advantageously, besides the indicator, the re-location function also receives information on a list of friendly earth-based roaming network.

This enables to inform the user equipment with more accuracy and according to a personalized way.

Advantageously, besides the indicator the re-location function also receives information on frequency bands and technologies supported by the device, but not used in conjunction with the satellite network.

This enables to select from a larger variety of earth-based networks.

The present invention also relates to a satellite-based network infrastructure comprising a user-equipment re-location function to manage user equipment re-direction to an earth-based network while the user equipment is connected to the satellite-based network or camps on the satellite-based network, said user-equipment re-location function being configured to:
- at the time of registration of the user equipment to the satellite-based network:
   o retrieving an earth-based service preference indicator for the user-equipment, and
   o storing said retrieved earth-based service preference indicator for further use, and then,
- when the user equipment at a given position proceeds to a subsequent action with the satellite-network it is connected to or it is camping on:
   o receiving, from the user equipment, with the action-related exchanges, the user equipment position,
   o reading the earth-based service preference indicator,
   o and in case, while considering the earth-based service preference indicator, suitable earth-based network for setting up service relation for said user equipment is available at the given user equipment position, sending to the user equipment an indication to perform a re-location attempt to said suitable earth-based network as indicated by the earth-based service preference indicator.

Such an infrastructure implementing the method of the invention insures that any user equipment that connected to the satellite-based network would be re-directed to earth-based network as soon as possible while respecting the capabilities of the user equipment as well as the nature of the communication established with the satellite-based network.

In addition said satellite based network infrastructure would preferably receive from the UEs HPLMN information on earth-based networks which would be potential roaming/re-location networks and UE capabilities on not used technologies or capabilities of the device in conjunction with satellite communication. With this additional information the satellite infrastructure and the related relocation function would be best served to evaluate a suitable roaming network.

A device normally being served by an earth-based network, may on purpose i.e. for security reasons prefer of being connected to the satellite network instead of being connected to another earth-based roaming network. Hence there needs to be for the device or its application a means to indicate whether being interested in being re-located to an earth-based network, or remaining on satellite network was chosen as preference.

The invention also describes the characteristic of a user equipment being roamed to a satellite network as being earth-based out-of-coverage indicating its desire being served again by earth-based station or a device having re-selected to the satellite service for other reasons i.e. security reasons.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

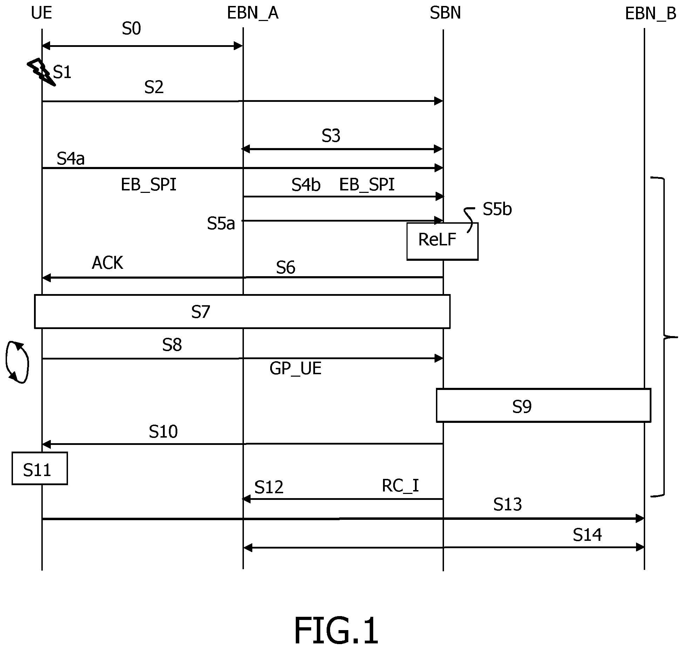

- Figure 1 is a time diagram of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

Figure 1 is a time diagram of the method of the invention.

At the beginning, illustrated by a step S0, a user equipment UE is connected to or camp on a first earth-based network EBN_A. Then, the user equipment UE loses coverage to earth-based network EBN_A in a step S1.

Typically the user equipment UE is a multimode terminal which can operate on NB-IoT, eMTC or GSM. As both are totally independent, the device can switch between the technologies, which requires re-registration. Whether in addition a downtime occurs depends on the resources available in the device. Some device have sufficient flash memory to switch between the stacks whilst other devices need to unpack the non-used version prior operation. Anyway a switch can be made in rather short time being also important for optimized search times. However, if no suitable earth-based network is found, meaning that the UE has searched or that it has received in the broadcast of network EBN_A no indication on other suitable networks present, the UE may decide to re-locate to a satellite-based network.

It is advantageous that an indication is given by the earth-based network to the user equipment indicating in areas with spare earth-based coverage whether satellite coverage is available and on which technology i.e. eMTC or NB-IoT. This information provisioning of EBN_A would provide a satellite coverage information with indication to technology eMTC or NB-lot and corresponding frequency. This information is especially valuable if coverage of satellite is not always present and hence said information would contain a timing relation or only being available when satellite are in reach. However, the presence of said information in conjunction with the absence of earth-based alternative indications, can also be used by the UE to directly search for satellites and not conducting an earth-based search, as no suitable networks are indicated even so EBN_A supports such indications in general, as seen by satellite presence indication.

A central server being integral part of the network, here the satellite-based network, could do the re-allocation of UEs towards earth-based network based on certain functionality and knowledge.

The UE position needs to be known, which is not an issue as for national regulations the GPS position of the UE is known when doing dedicated signalling exchange with the network.

The invention implements advantageously a central server assisted where said central server also has a connection to the HPLMN (Home Public Land Mobile Network) or at least to the HLR (Home Location Register) or be part of it, so that the HPLMN controls the re-selection process. Said central server could be connected as a service to the satellite network and being controlled by the HPLMN/MNO of the UE. In that way the central server would also have the knowledge which are earth-based roaming partners. So that it can then only indicates to user equipment when accessible network is in reach. It means that it would be a UE executed process, i.e. by the UE performing the search and re-selection to the earth-based network, directly assisted from a central server or functionality i.e. HPLMN re-selection support server which could also be part of the HPLMN or part of the satellite network when being under shared control.

Moreover this would be a new type of indication, as it would be an indication on a different PLMN for circumvention of longer lasting coverage loss. In certain areas an entire earth based deployment does not make sense. For example Canada is only equipped with radio stations 150km along the US border, in cities and in some more areas, whilst for roads in the north, it would not make sense. In such a case, the last coverage base station is advantageously equipped to give an indication to switch to satellite-based network for any NB-IoT supporting user equipment. This is, for those earth-based nodes, a static broadcast indication being close to existing ones, just referring to mode used on satellites and reflecting that from satellite-operators, which is a different PMN (Public Mobile Network).

In the situation where coverage is not anymore available, the user equipment UE then typically tries, under indication or by itself, to reach a satellite-based network SBN in a step S2. When successful, roaming information and negotiation are performed in a step S3 between the earth-based home network of the device (in this case for simplicity also EBN_A) and the satellite-based network SBN. Such roaming negotiation are known from the prior art.

According to the invention, i.e. when the UE reaches out of the satellite-based network, according to a first option, in a step S4a the UE provides an indication EB_SPI to the satellite network that it would prefer earth based service, i.e. is roamed for coverage reasons to the satellite network and would like to return once earth-based coverage is available again.

Alternatively, according to a second option, in parallel or subsequently to the roaming negotiation, the satellite-based network SBN retrieves from the earth-based network EBN_A an earth-based service preference indicator EB_SPI corresponding to this user equipment S4b.

The aforementioned re-location function thus retrieves a UE capability information from the UEs HPLMN where especially UE capabilities on technologies, frequency bands and features are listed not being used in conjunction with the satellite communication.

This earth-based service preference indicator EB_SPI is stored by a user-equipment re-location function ReLF located in or connected to the satellite-based network SBN in a step S5.

The indicator is received by the satellite-based network SBN for any roaming devices which has the preference to return to earth-based service, i.e. any device having a different HPLMN than the satellite-based network. Said indicator is only transferred/retrieved in case of roaming to a satellite network, preferably when roaming was done for coverage reasons.

The indicator can be received in two potential ways. First way is from the user equipment UE directly when registering to the satellite network.

Second way is from the earth-based Home Public Land Mobile Network HPLMN of the device as the satellite-based network SBN negotiates access with the HPLMN.

Thus said indicator is received by the satellite network.

Reception can be done via the HPLMN towards the satellite-based network when the user equipment's roaming and accessing is granted. Alternatively the indicator can be a part of the user equipment's capability information, i.e. information on supported set of capabilities, said set may be restricted to capabilities required for UE communication exchange with the satellite-based network.

The set of general supported technologies and frequency bands supported can be received in a step 5a from the HPLMN in this case EBN_A with inclusion of a list of potential earth based roaming networks, which could be identified by its MNC, in which the device could roam. Providing all said information from the UE is considered unfavorable.

In general when the indicator is received by the earth-based network the user equipment UE is coming from, during roaming communication, the communication between the network is correspondingly stipulated, i.e. exceeding pure roaming negotiations but also including communication on earth-based suitable networks and non-active technologies supported by the user equipment UE.

Regardless on the way of receiving it, the indicator is stored together with an identifier of the user equipment UE in the MME (LTE), respectively AMF (5G), of the satellite-based network SBN.

The earth-based service preference indicator EB_SPI comprises information to be known by the satellite-based network to assist the user equipment UE to switch from satellite to earth-based connection or for related assistance.

The indicator EB_SPI also comprises information whether the user equipment UE prefers to be earth-based operated. It informs the satellite-based network if the user equipment UE wants to change.

The information on the technologies supported by the user equipment UE, and especially any other as the one in use could also be contained in indicator EB_SPI. Indeed the satellite-based network may implement NB-loT whilst in certain areas only eMTC is deployed in earth-based networks. This is thus important for the satellite-based network to know if the user equipment supports eMTC technology.

The indicator EB_SPI also comprises information whether the user equipment UE is also able to communicate if needed with the not-used core, i.e. 5GC or EPC as NB-IoT and eMTC can be deployed with either of the core networks and hence it is important to know whether UE would also especially understand the legacy EPC core. It also states whether the user equipment UE supports an additional unused technology, i.e. NB-loT or GSM as such is also indicated, as supported core network types.

The indicator EB_SPI also includes earth-based networks/PLMNs which would accept said user equipment UE in conjunction with the earth-based preference. It gives the coverage of friendly networks for example.

The indicator EB_SPI, together with the position of the user equipment UE that is periodically provided by default by the user equipment UE to the satellite-based network, enables the satellite-based network to manage the re-direction of the user equipment UE to a suitable earth-based network. In an advantageous embodiment, the satellite network receives the EB_SPI from the UE directly, indicating the wish to be supported in relocation to earth-based service (step S4a) and all additional information on supported technologies, especially those not used with the satellite, frequencies and also potential roaming earth-based partners from the HPLMN of the device. In step S5a. Such an approach would minimize signaling on the air-interface, the satellite network could indicate in roaming negotiations with HPLMN that UE already indicated its earth-based preference and the HPLMN delivers the additional information to the satellite network.

Once the aforementioned indicator is available, as it will appear in the following, the satellite-based network would be able to indicate a preferred candidate for earth-based communication for the user equipment UE to perform a search or directly perform re-direction to earth-based communication when later possible, i.e. once an earth-based network is detected as available at the position of the user equipment.

Most advantageous would be the presence indication being included in the communication termination, so that UE could run the well-known cell selection process in a directed search manner.

Network assisted re-location to earth as a service provided by satellite-based networks is a new aspect. Currently return to HPLMN/EHPLMN is done via periodic timer search what would be in such cases inefficient and battery draining. Periodic search performed by the device drains the battery or leads to long delays. Satellite service provisioning or just the camping on the satellite network drains more power than camping on earth-based networks as the satellite which provides service/camping may change quite often especially in LEO scenarios, which requires re-acquisition of some of the BCH information.

Besides such periodic search for a PLMN, there is a need for technologies to be altered and information material to be kept actual in the user equipment, in case that is intended to serve as assistance information for doing a more dedicated search, as no information for assistance can be retrieved from the satellite.. Such burden is avoided by the new satellite return to earth service of the invention. This new service model would increase acceptance. The invention also avoids the user equipment to have to store coverage material of operators based on position requiring extra memory and to have to keep this material up to date.

The roaming negotiation ends in a step S6 with the sending of a roaming acceptance ACK to the user equipment UE.

Subsequently, the user equipment UE is served by satellite-based network in a step S7, meaning that the user equipment registers and camps on the satellite-based network SBN.

Then the invention takes profit of the reporting by default by the device of its geographical position for related satellite treatment. Indeed national laws requires such a feature to be implemented in user equipment and the user equipment's position needs to be evaluated regularly anyway. Such a reporting of a geographical position of the user equipment GP_UE is done in conjunction with a UE service request by the user equipment UE in a step S8. It enables the user equipment UE to be treated according to the national regulations. It is here noted that step S8 could also be UE connection request. Hence at the satellite-based network, the country is known and said information can be used by the satellite-based network for coverage evaluation.

Each time the satellite-based network receives such a geographical position GP_UE for this user equipment UE, it checks for any suitable earth-based networks EBN_B in a step S9. For this purpose, the satellite-based network has advantageously access or exchanges information with the HPLMN regarding the user potential roaming partners on the user equipment position GP_UE. Typically coverage areas of networks are available in the internet or received by the corresponding operators as global map, as also they have an interest in early user equipment UE handback to earth. It means that the re-location service center/function would store and maintain such coverage maps.

If ever a suitable earth-based network EBN_B is found, an indication to relocate to earth is sent in a step S10 to the user equipment UE. Thus typically, in case the user equipment UE has reached such a roaming coverage providing area, the satellite-based network SBN will, for the current session in which the position was provided or latest upon next user equipment activity, include an indication in the a RRC (Radio Resource Control) signalling related to earth-based coverage available. Such indication can also be provided by the satellite-based network with a special paging message, if it was not evaluated in time prior terminating the connection and next connection setup may last long and hence assistance information may no more be accurate. Typically the relocation indication is encapsulated in the paging message.

Thus with the invention, the user equipment UE that connected to satellite-based network SBN, typically as momentary out of earth-based network coverage, is associated with an earth-based service preference indicator indicating that an earth-based service is preferred. As the connecting satellite exchanging information with the user equipment UE always gets position, the satellite-based network is able to evaluate, in collaboration with the MME (Mobility Management Entity) or the AMF (Access and Mobility Management Function), a match between the earth-based service preference indicator and the available earth-based network at the current position of the user equipment. If there is a match, the user equipment UE receives corresponding assistance information to conduct related cell selection procedure. The earth-based preference indicator advantageously is separated from the capabilities of the user equipment and its compatibilities with the various different sub-networks/sub-technologies existing in 5G technology such information can advantageously be received from HPLMN during roaming negotiations done between the core networks.

Optionally the user equipment then reconfigure itself in a step S11. Optionally again, the satellite-based network SBN sends to the first earth-based network an information RC_I that the user equipment UE was resent to an earth-based network in a step S12. Said information could also be optimally in the other direction, following step S14, and sent once the UE was re-located to EBN_B, so that the core network does not need further resources on said UE.

Then according to known procedure, the user equipment UE connects to the suitable earth-based network EBN_B in a step S13 and performs the roaming negotiation in a step S14.

Preferably based on same core 5GC or EPC, the selection based on same core is considered to be superior as same RAT and is advantageous as one re-direction rule. Even as this means a certain burden for the user equipment i.e. changing the RAT, but being overall advantageous, especially as such user equipments may have sufficient resources for changing the RAT on the fly, i.e. no downtime. So it helps to minimize the interruption in service time, as a re-registration to a different core 5GC/EPC would cost more time and signaling effort and causes larger downtime/out-of-service time than just changing RAT and maintaining type of core, to allow a context fetch.

Said option is of special interest in case of scenarios, where the UE or respectively the UE owner only wants to ensure that it is continuously connected and attached. So he reaches out to one roaming partner, i.e. satellite to be reachable everywhere.

The UE changes to the satellite network when being out -of coverage on its earth-based serving network. The satellite network itself has again a number of roaming partners to offload UEs of its network. So a UE which has indicated it prefers to be earth-service based may accordingly to be roamed by the satellite network to another network. This could be interpreted as some sort of sub-roaming agreement for traffic offloading in the satellite network.

In general the invention makes out off a user equipment autonomous PLMN re-selection feature which is controlled in periodicity by parameters provided by the HPLMN to the SIM/USIM card, a network supported re-location to earth feature. The user equipment is able to indicate when registering to the satellite-based network, an earth based service preference indicator. Hence whenever the user equipment exchanges data with the satellite-based network, it will evaluated whether re-location to earth or better the search for a network to re-locate would makes sense for the UE.

Additional information for evaluating the best-suited earth-based roaming PLMN is provided by the HPLMN to the re-location evaluation function including roaming partners and frequencies/technologies supported by the device not used by the UE when communicating with the satellite network, hence not contained in UE capabilities. Furthermore the periodic re-location search is reduced to network search opportunities based on network indications, received when signal communication is terminated or via extra paging. The indication is only provided when suitable earth-based roaming networks are in reach. So out of a periodic search for HPLMN, the invention gives a new opportunity-driven search approach as search is anyway battery costly. Also staying too long connected or camped on the satellite is energy costly compared to earth-based camping.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to assist an user equipment re-location to an earth-based network while the user equipment is connected to a satellite-based network or camps on a satellite-based network, said method comprising the steps of, for the satellite-based network:
- at the time of registration of the user equipment to the satellite-based network:
∘ retrieving an earth-based service preference indicator for the user-equipment,
∘ storing, by a user-equipment re-location function connected to the satellite-based network, said retrieved earth-based service preference indicator for further use, and then,
- when the user equipment at a given position proceeds to a subsequent action with the satellite-network it is connected to or it is camping on:
∘ receiving, from the user equipment, with the action-related exchanges, the user equipment position,
∘ reading the earth-based service preference indicator by the re-location function of satellite-based network,
∘ evaluating available earth-based networks,
in case, while considering the earth-based service preference indicator, suitable earth-based network for setting up service relation for said user equipment is available at the given user equipment position, sending to the user equipment an indication to perform a re-direction attempt to said suitable earth-based network.

2. Method according to claim 1, said method comprising a preliminary step of storing and updating, for each user equipment, an earth-based service preference indicator in a central server accessible to the satellite-based network, said earth-based service preference indicator for the user-equipment being then retrieved by the satellite-based network from this central server.

3. Method according to claim 2, wherein the storage of the earth-based service preference indicator is performed when the user equipment is accepted as roaming user equipment by the satellite-based network from the previously connected Public Land Mobile Network or from a previously connected Public Land Mobile Network.

4. Method according to one of the preceding claims, wherein the earth-based service indicator is retrieved directly from the user equipment and additional user equipment capability information are retrieved from the currently previously connected Public Land Mobile Network or from the Home Public Land Mobile Network.

5. Method according to one of the preceding claims, wherein the retrieval of the earth-based service indicator is performed when the user equipment starts to camp on satellite-based network.

6. Method according to one of the preceding claims, wherein the re-location function retrieves a list of suitable earth-based roaming networks for earth-based service of the user equipment.

7. Method according to claim 6, wherein said list of suitable earth-based roaming networks is retrieved from a user equipment's Home Location Register or from the user equipment itself during camping on the satellite-based network.

8. Method according to one of claims 6 and 7, wherein the list of suitable earth-based networks is established based on off-loading contracts for the earth-based networks to accept re-direction of the user equipment from satellite-based networks.

9. Method according to one of the preceding claims, wherein the re-location function of the satellite-based network is located in an Access and Mobility Management Function of the satellite-based network.

10. Method according to one of the preceding claims, wherein the indication is sent to the user equipment within a connection termination message.

11. Method according to one of the preceding claims, wherein the connection termination is an RRC connection release with an indication that a suitable earth-based network is available for re-location.

12. Method according to one of the preceding claims, wherein the indication is sent to the user equipment by use of a paging message.

13. Method according to claim 12, wherein, while receiving the paging message, the user equipment ignore said paging message in relation to the satellite-based network and perform re-location instead.

14. Method according to one of preceding claims, said method further comprising the step of sending earth information to the suitable earth-based network as indicated in the earth-based service preference indicator to ease the re-direction of the user equipment to this earth-based network.

15. Method according to one of the preceding claims, wherein the earth-based service preference indicators comprises at least an information whether the user equipment UE prefers to be earth-based operated and any sort of information on the technologies supported by the user equipment comprising frequency bands supported by the UE, roaming networks which the UE could connect to, PLMN and EHPLMN information.

16. Satellite-based network infrastructure comprising a user-equipment re-location function to manage user equipment re-direction to an earth-based network while the user equipment is connected to the satellite-based network or camps on the satellite-based network, said user-equipment re-location function being configured to:
- at the time of registration of the user equipment to the satellite-based network:
∘ retrieving an earth-based service preference indicator for the user-equipment, and
∘ storing said retrieved earth-based service preference indicator for further use, and then,
- when the user equipment at a given position proceeds to a subsequent action with the satellite-network it is connected to or it is camping on:
∘ receiving, from the user equipment, with the action-related exchanges, the user equipment position,
∘ reading the earth-based service preference indicator,
∘ evaluating available earth-based networks,
∘ and in case, while considering the earth-based service preference indicator, suitable earth-based network for setting up service relation for said user equipment is available at the given user equipment position, sending to the user equipment an instruction to perform a re-direction attempt to said suitable earth-based network as indicated by the earth-based service preference indicator.
